# EUROPÄISCHE PATENTANMELDUNG

(11) **EP 3 431 886 A1**
(43) Veröffentlichungstag der Anmeldung: **23.01.2019**
(21) Anmeldenummer: 18000505.0
(22) Anmeldetag: 25.03.2011
(51) Int. Cl.: F24D 17/00, F24D 10/00

(54) **VERFAHREN ZUM ERWÄRMEN VON TRINKWASSER, HAUSTECHNIKSYSTEM, WOHNUNGSSTATION UND GEBÄUDE**

(30) Priorität: 25.03.2010 DE 102010012839
(62) Teilanmeldung aus: 11002499.9
(71) Anmelder: Delta Systemtechnik GmbH, 29227 Celle (DE)
(72) Erfinder: Habecker, Hartmut, DE - 31303 Burgdorf (DE); Geck, Thomas, DE - 30559 Hannover (DE)
(74) Vertreter: Farago-Schauer, Peter Andreas

(57) **Zusammenfassung**

Es werden ein Verfahren und ein Haustechniksystem vorgeschlagen, welche sehr effizient Trinkwarmwasser für Wohnungen, Büros, Ladengeschäfte und Gehäudeeinheiten bereitstellen.

Die Erfindung basiert auf einer zweistufigen Erwärmung für das Trinkwasser, wobei zwei sich ergänzende Erwärmungsstufen unterschiedlichen Prinzips vorgesehen sind, nämlich eine mittels eines Wasser-Wasserwärmetauschers und eine mittels eines elektrischen Nachheizers.

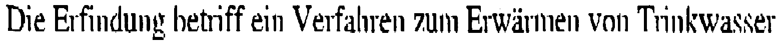

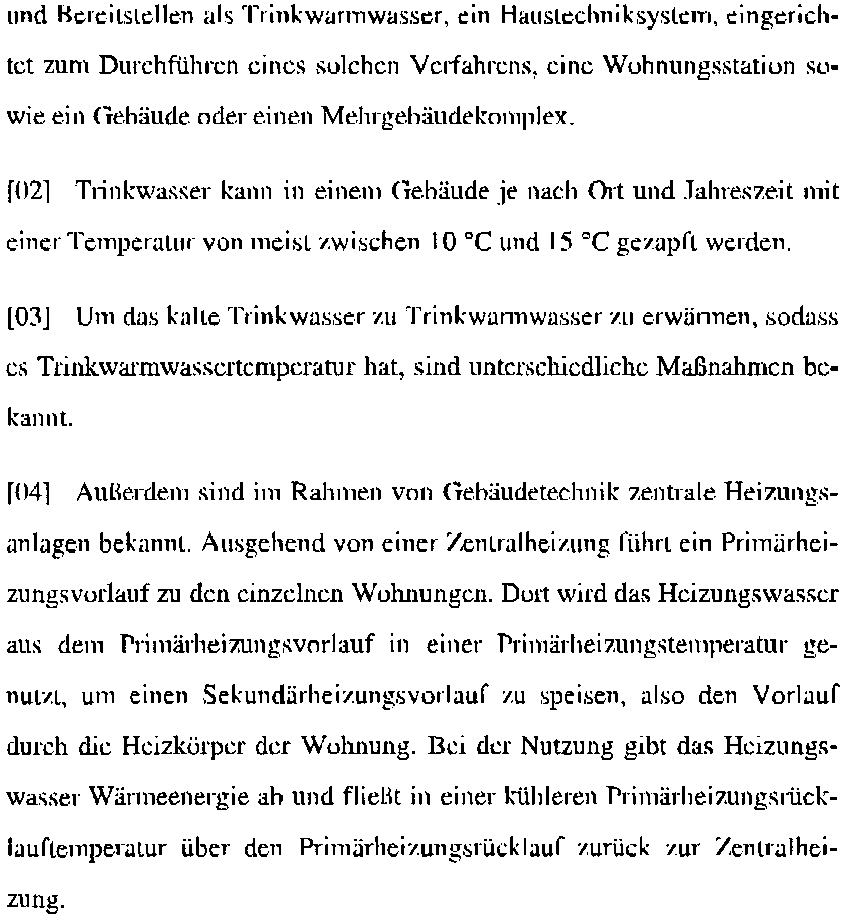

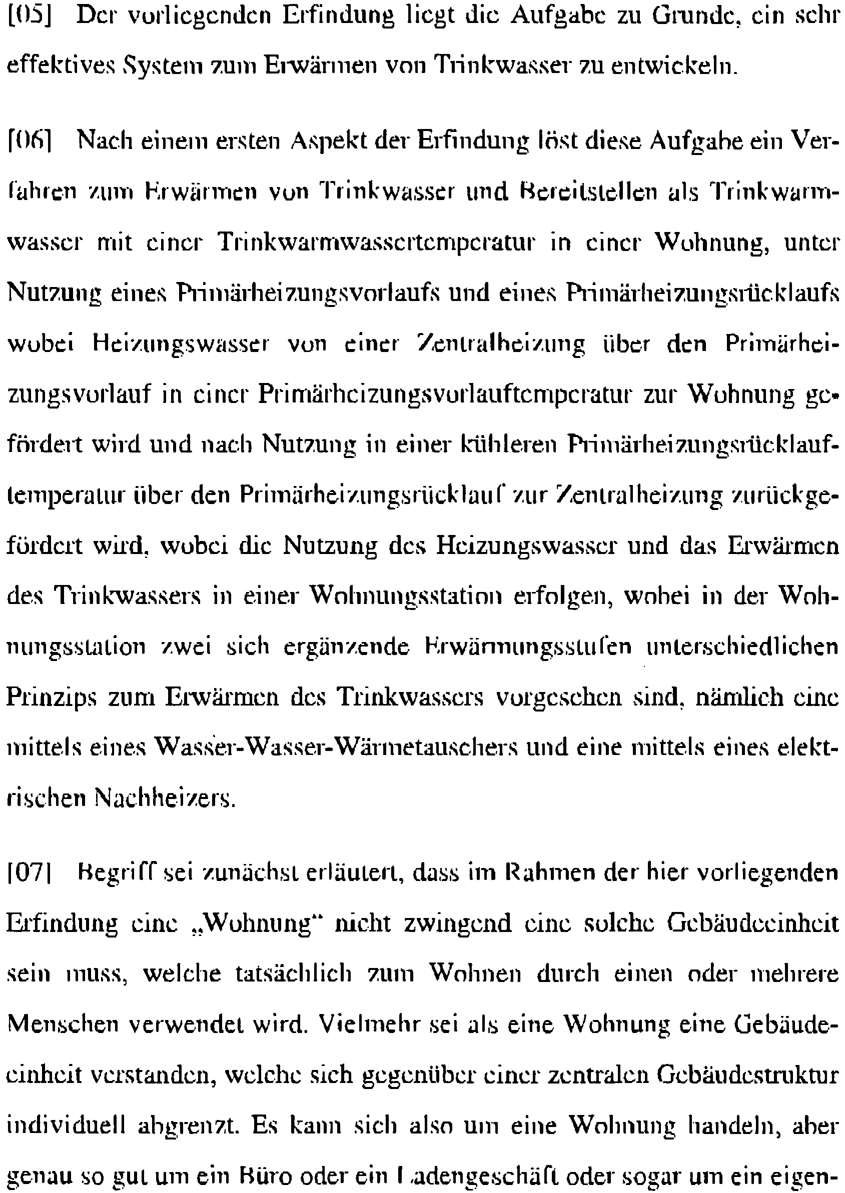

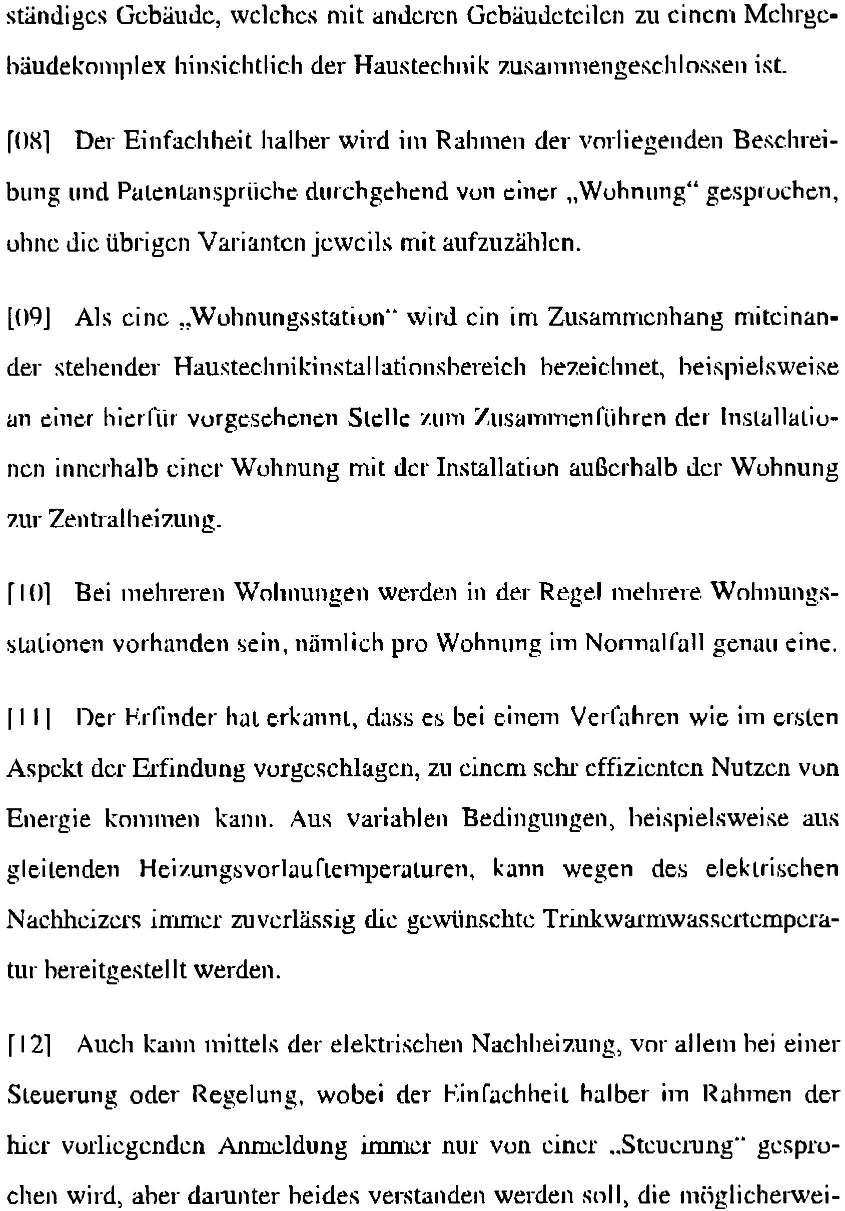

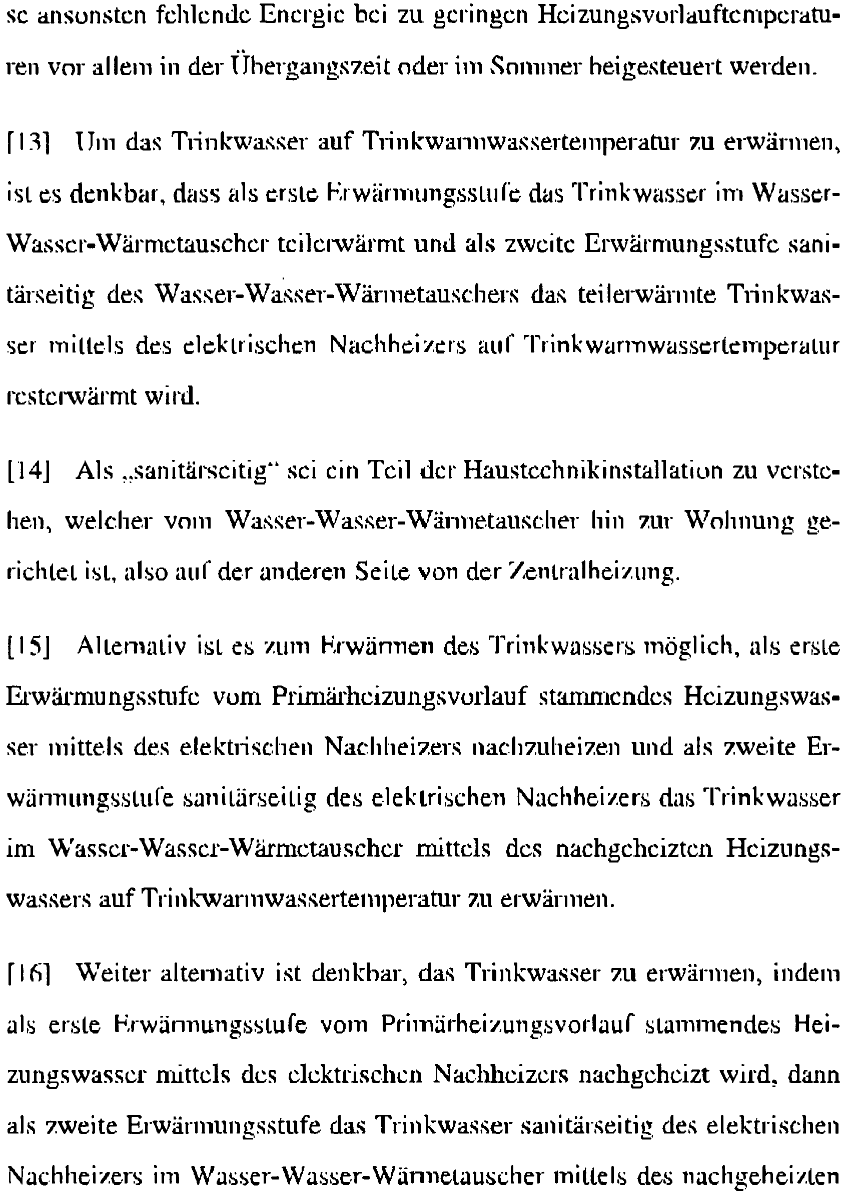

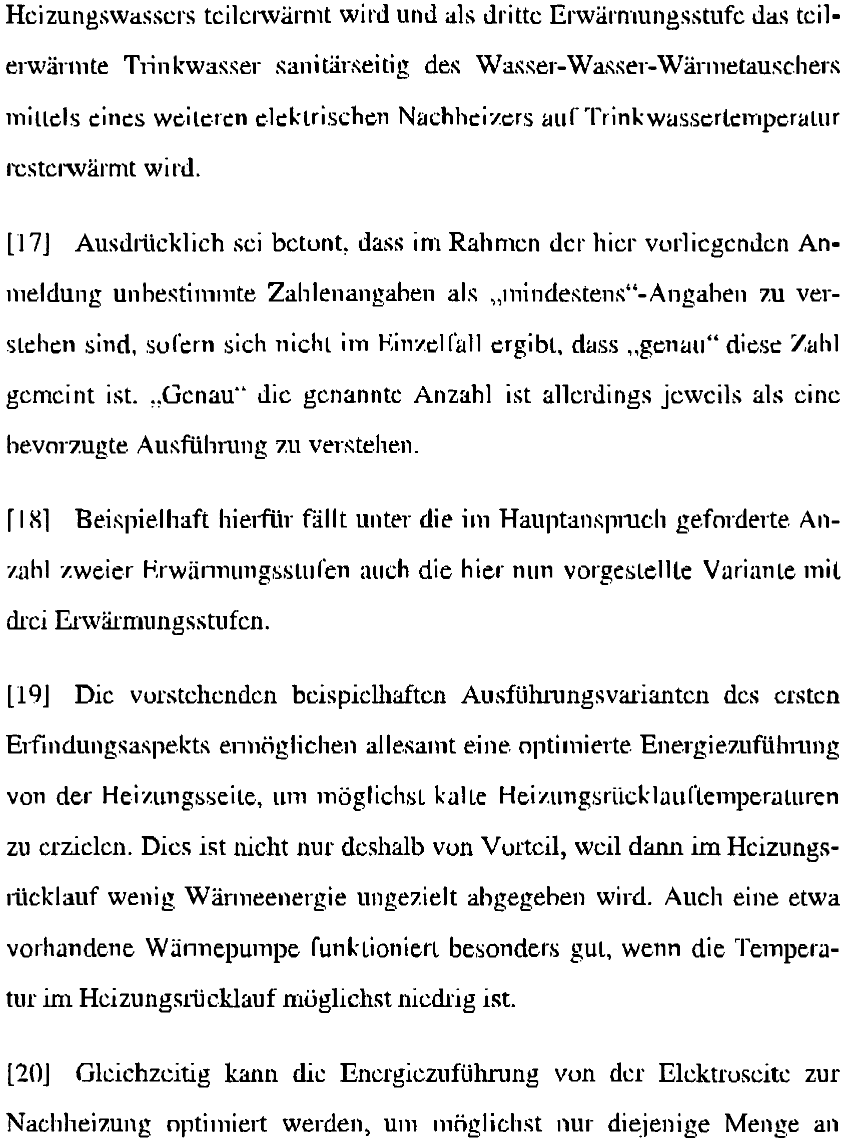

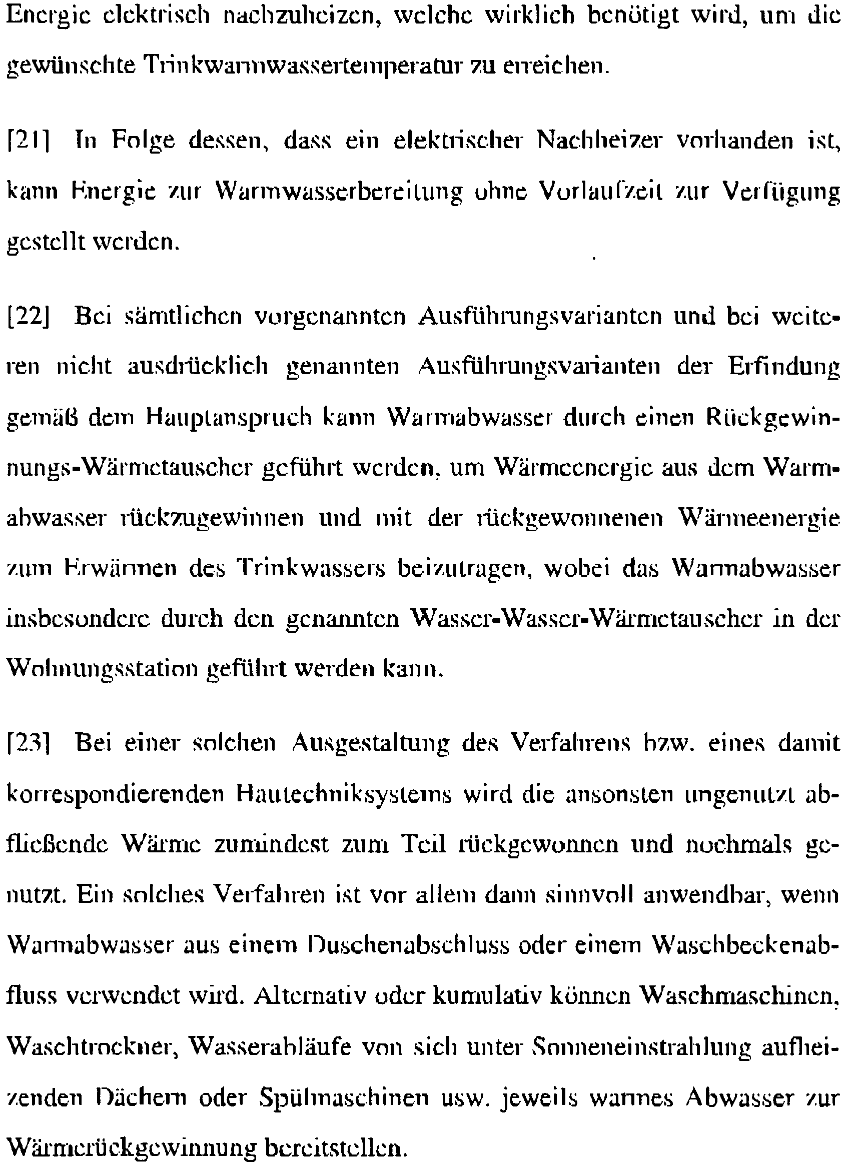

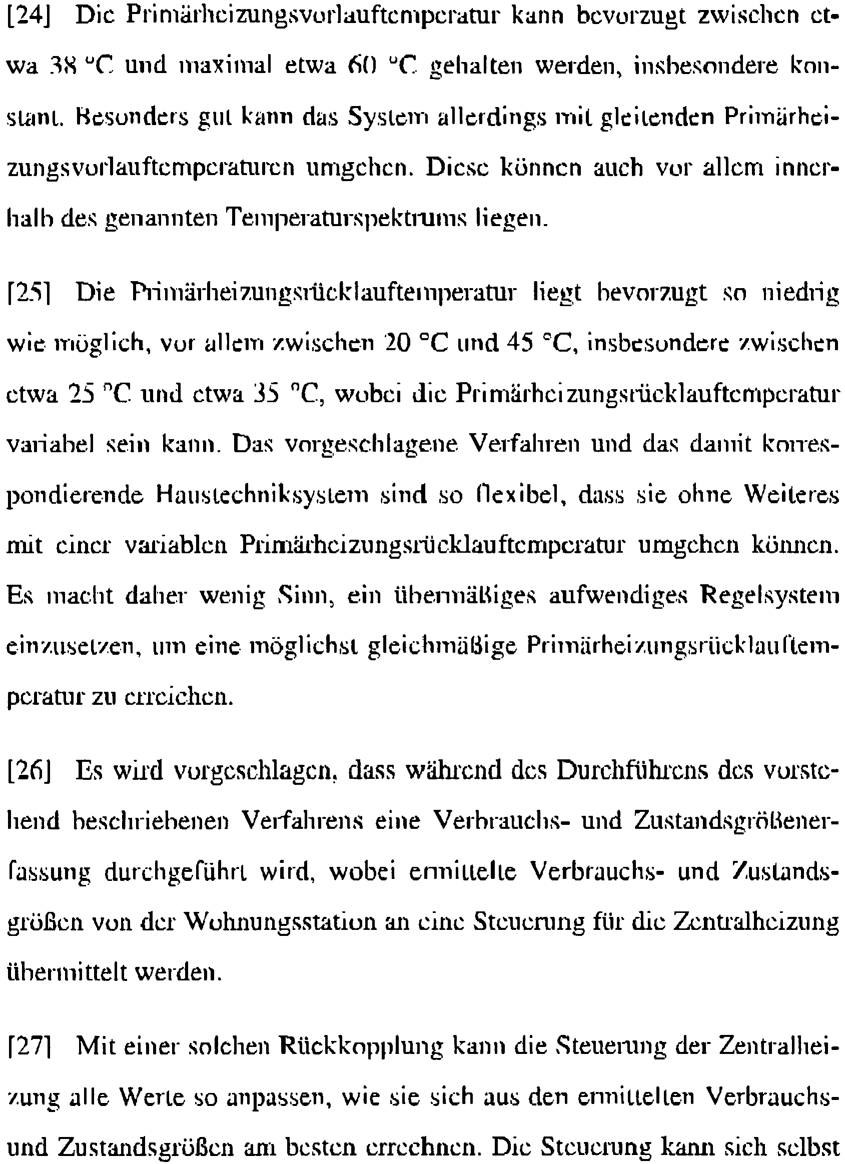

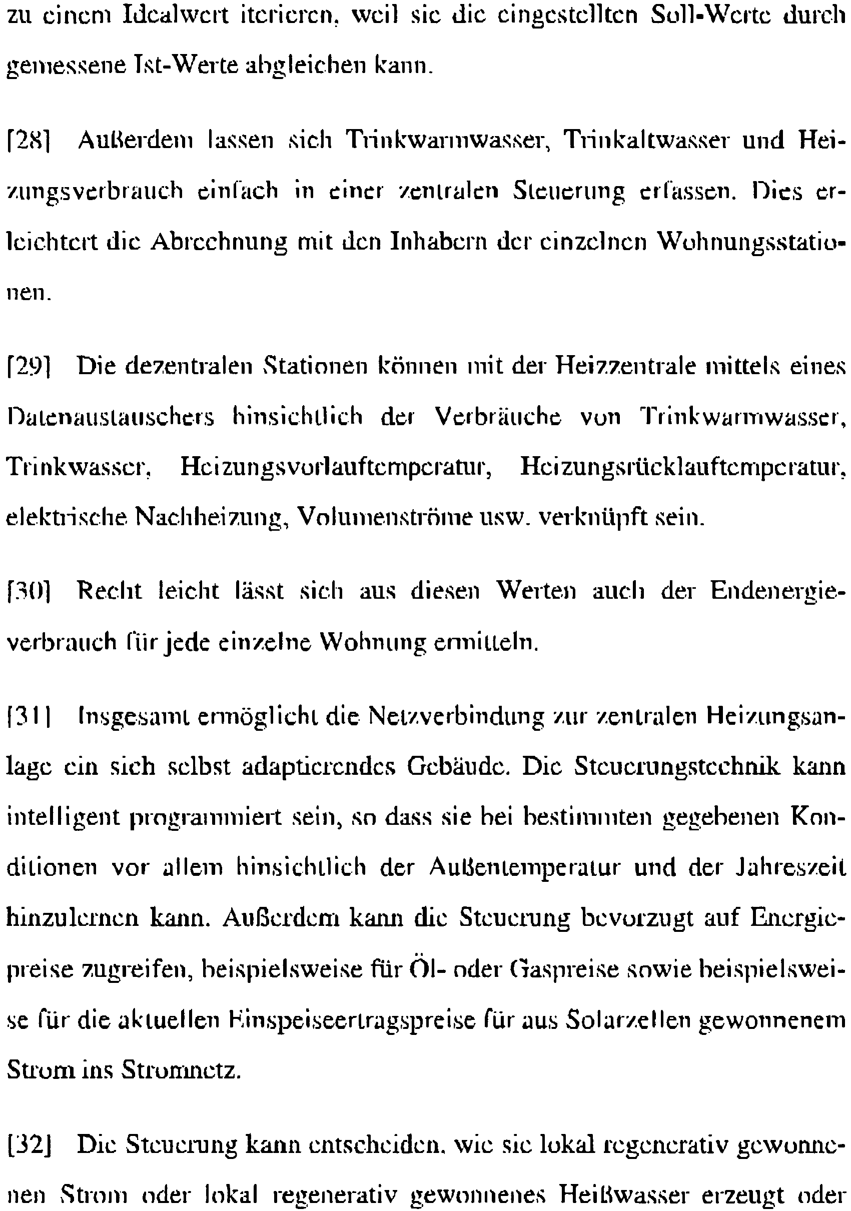

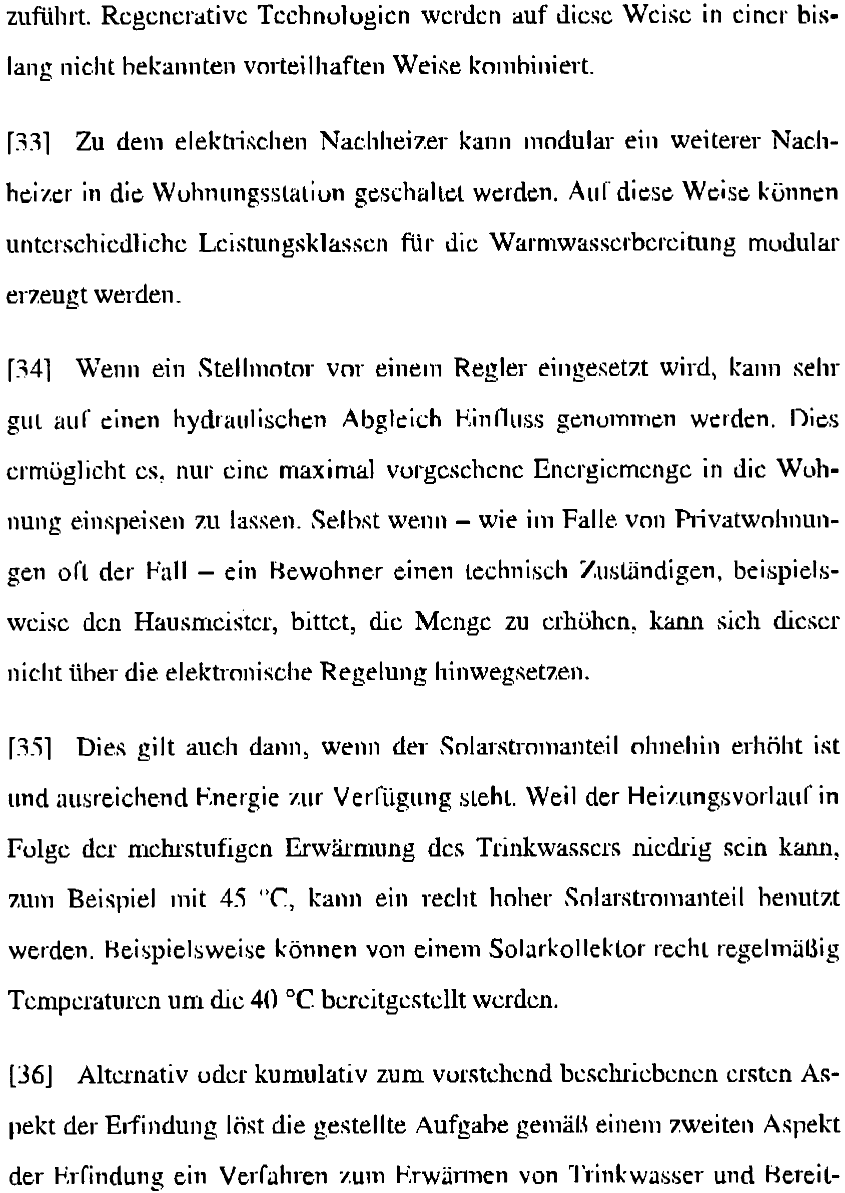

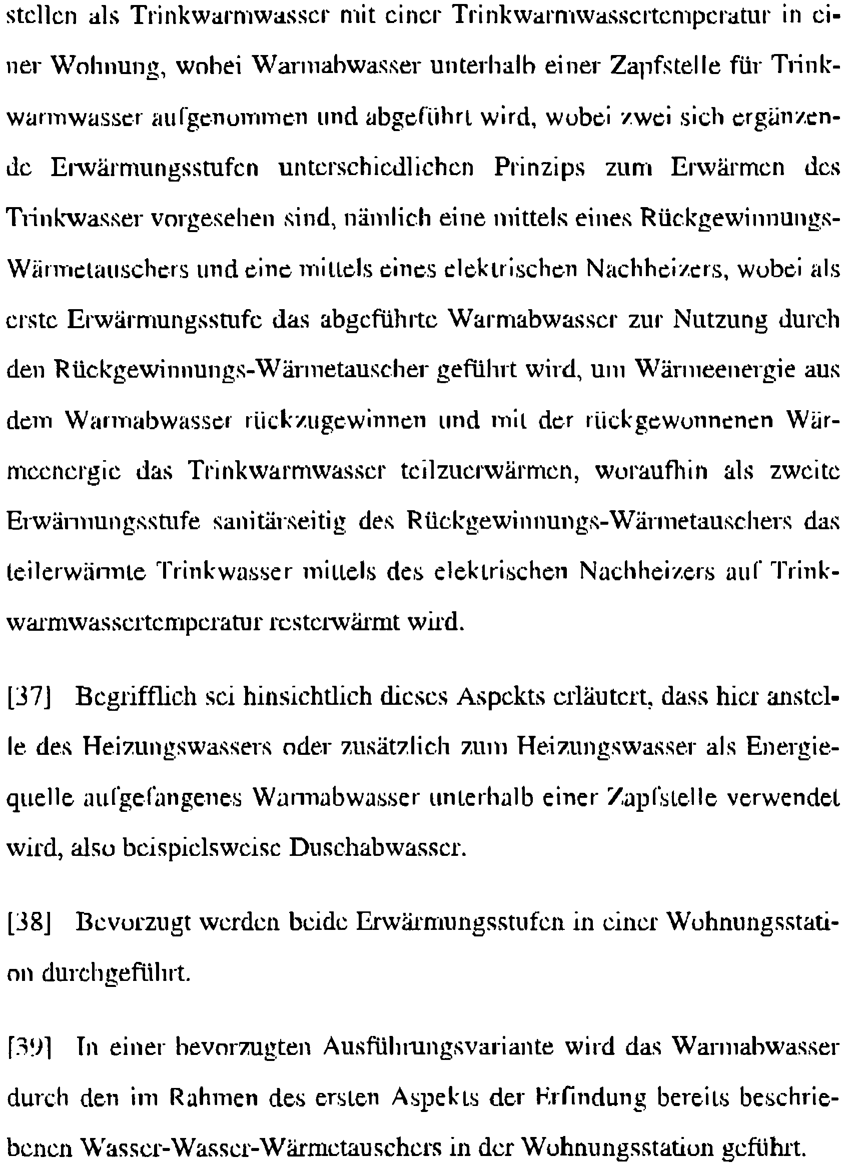

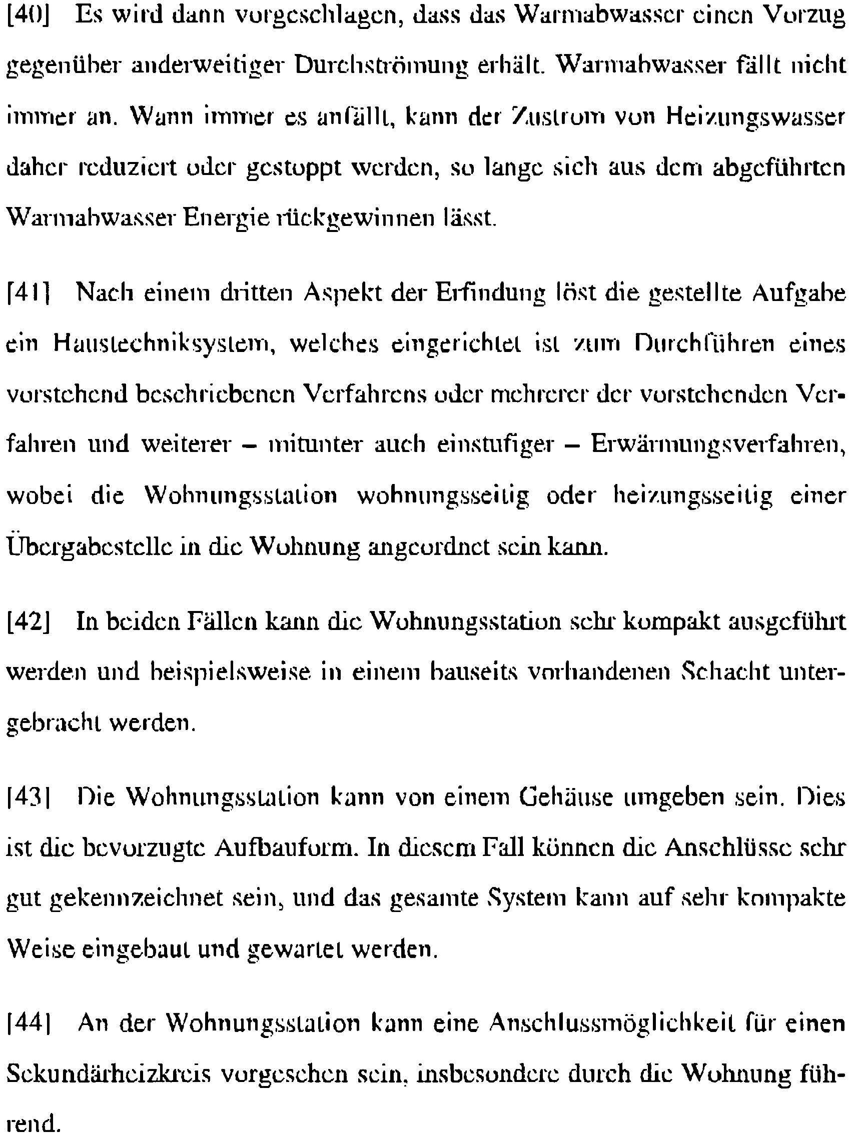

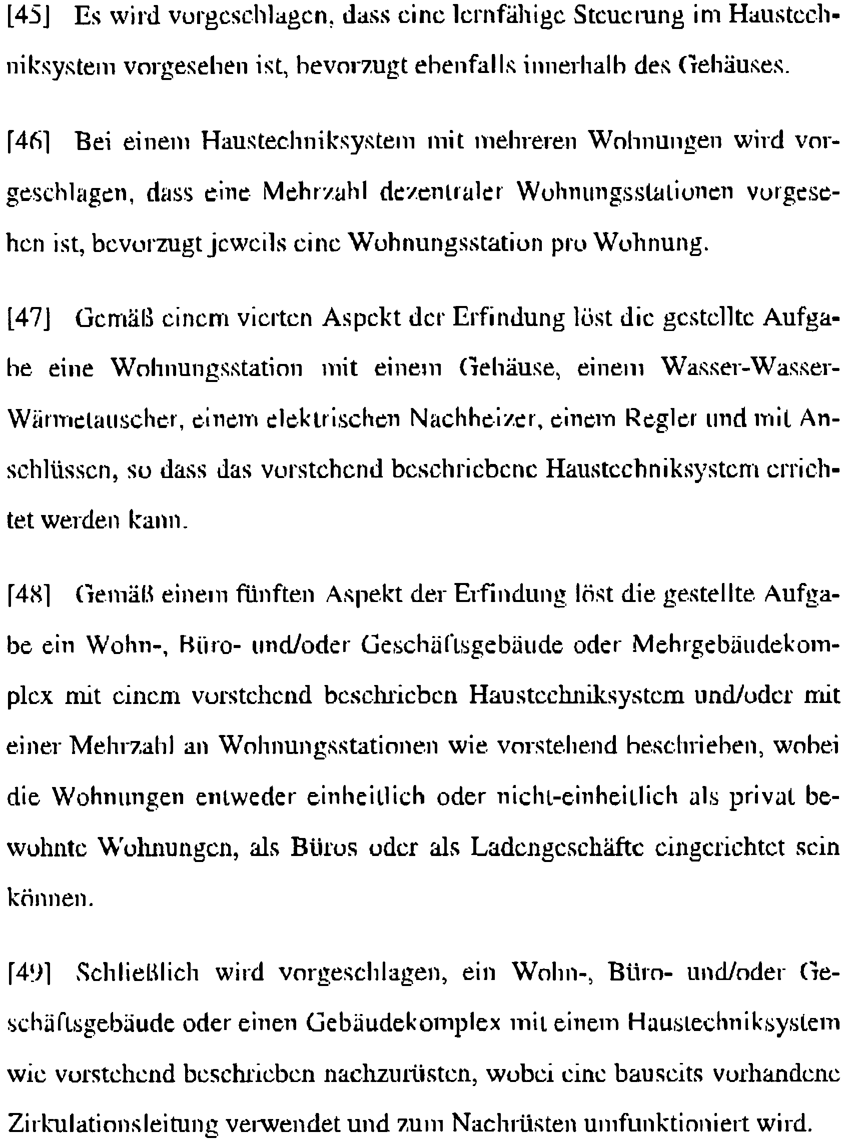

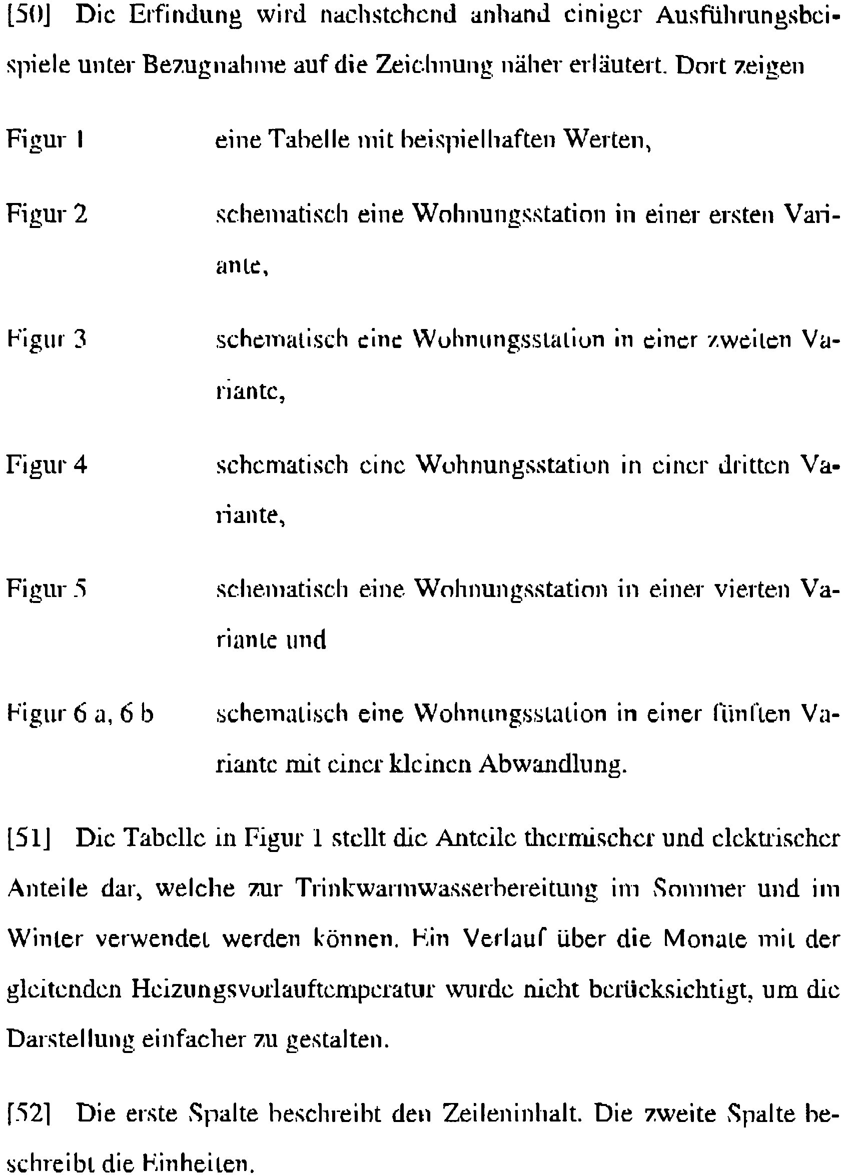

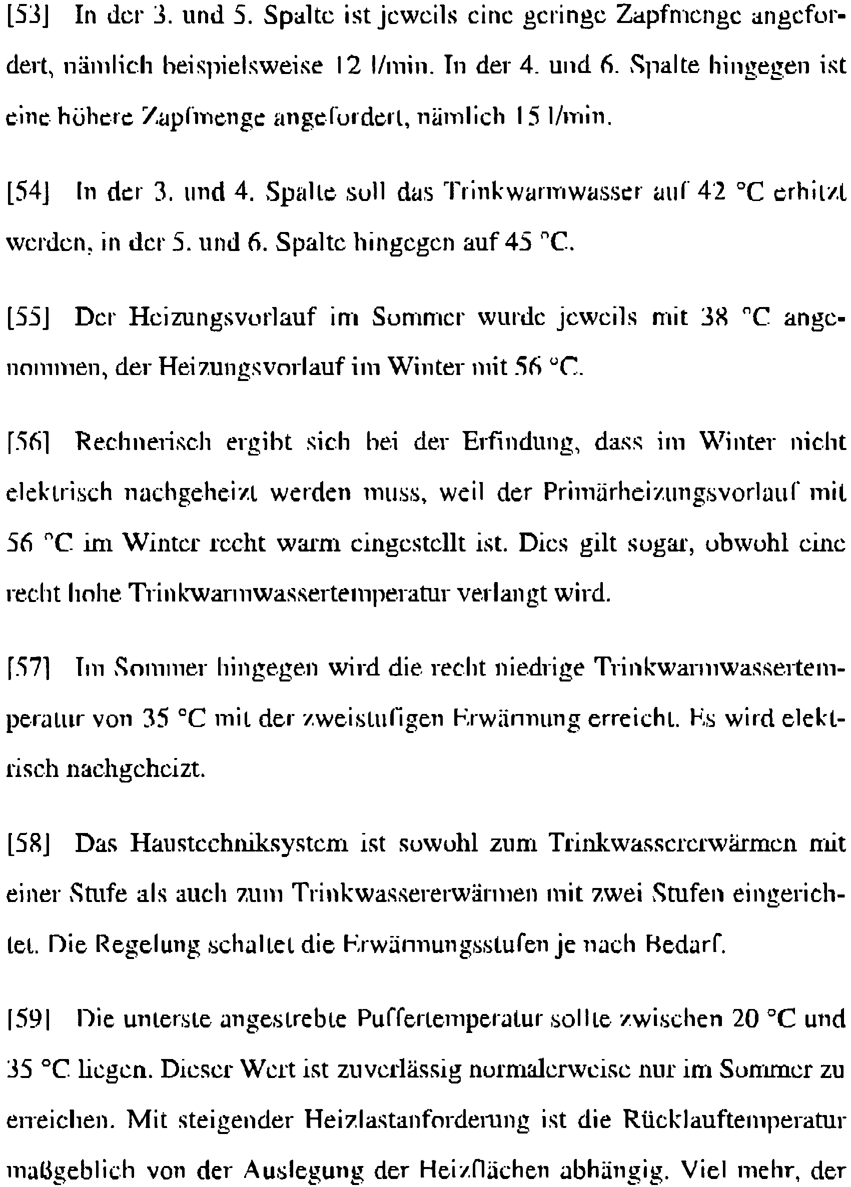

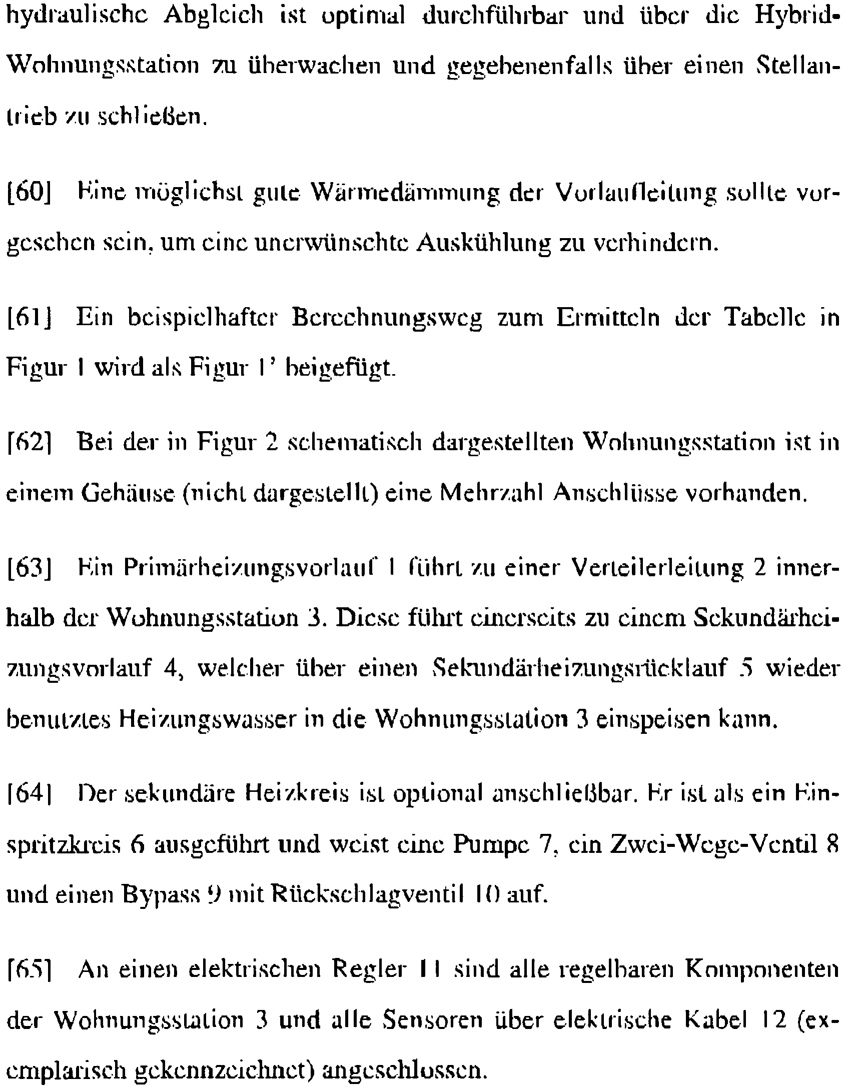

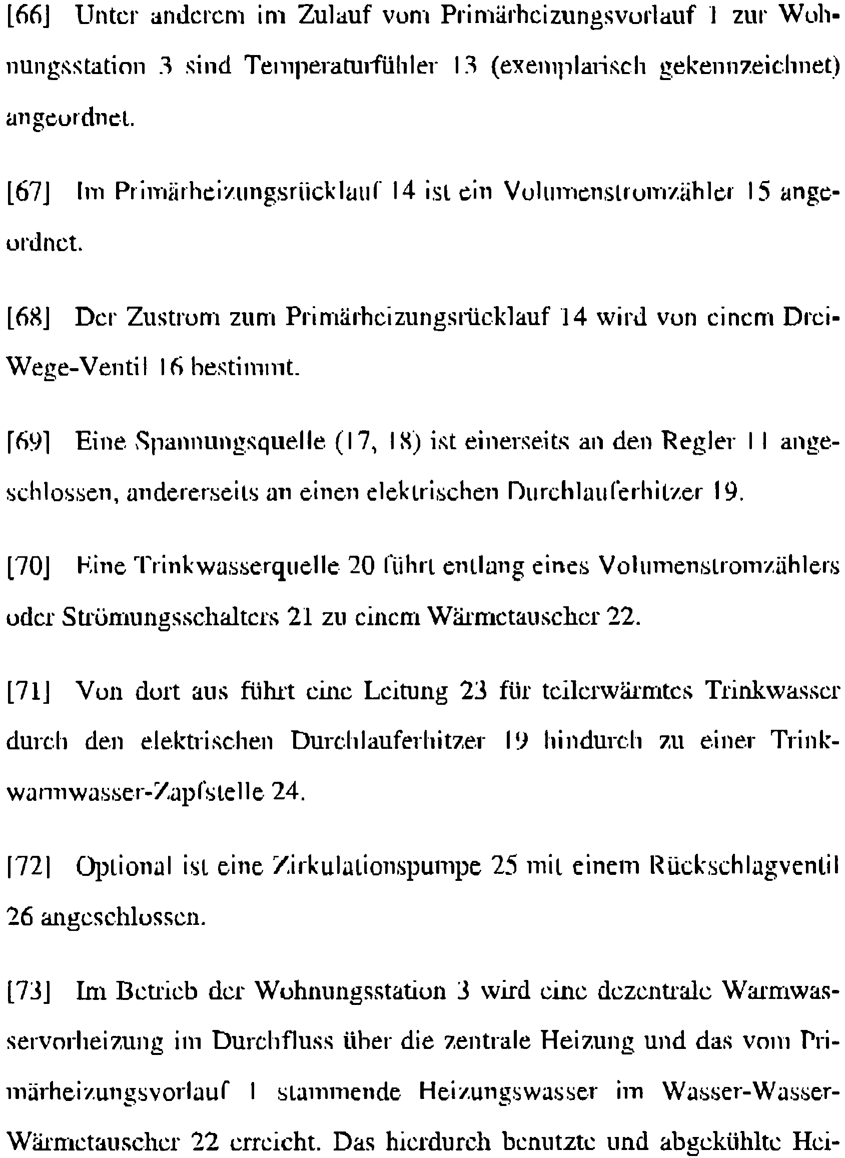

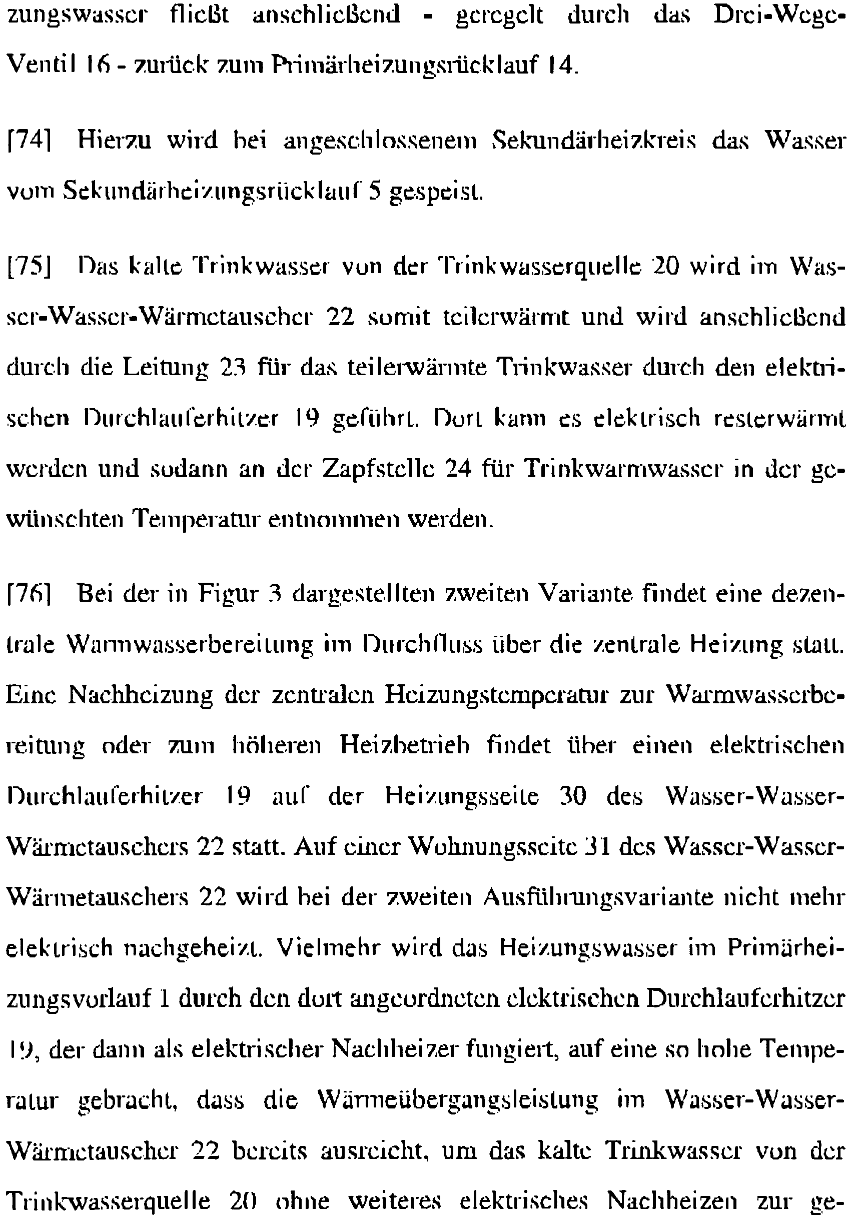

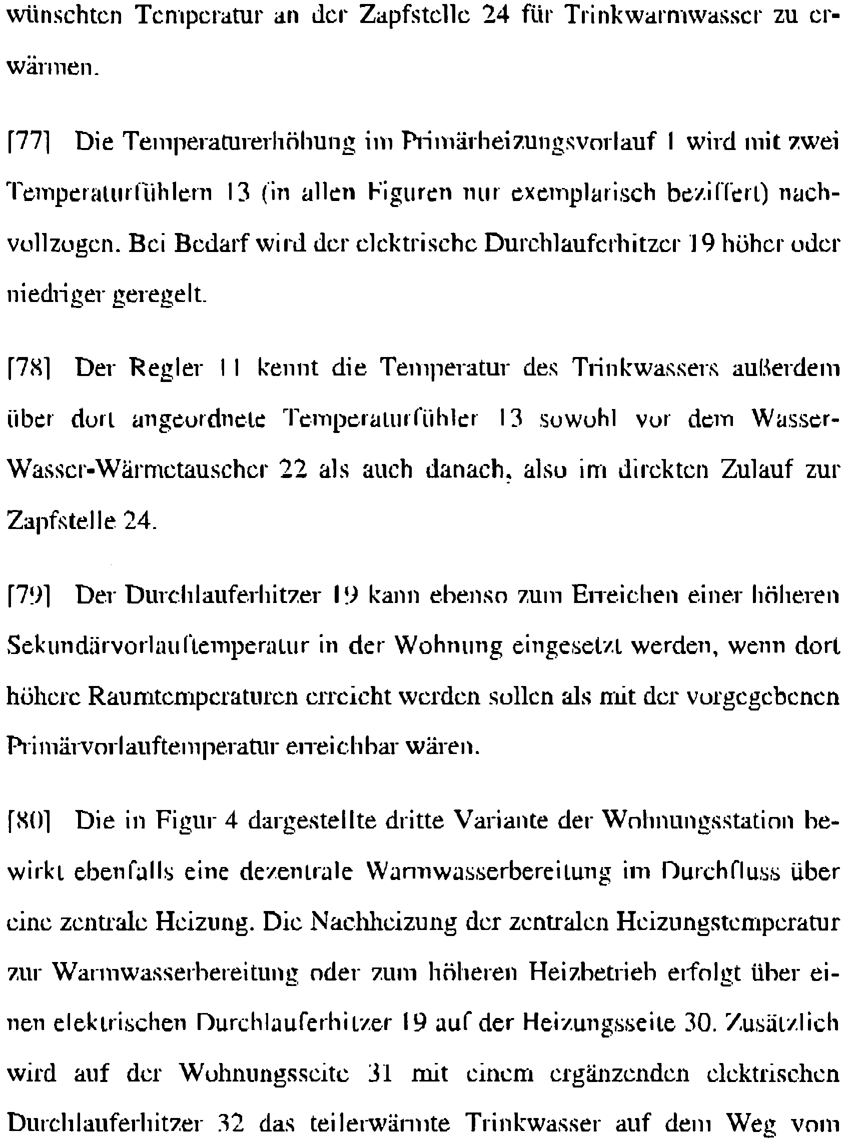

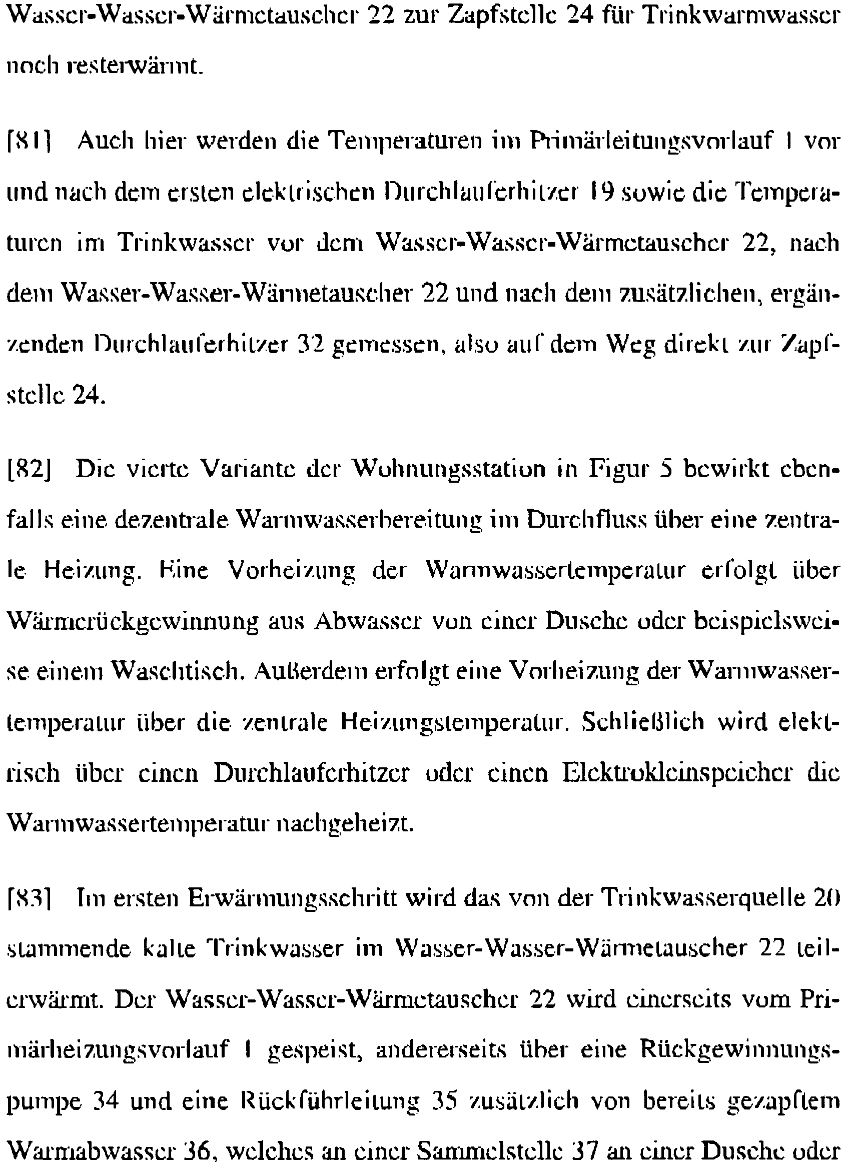

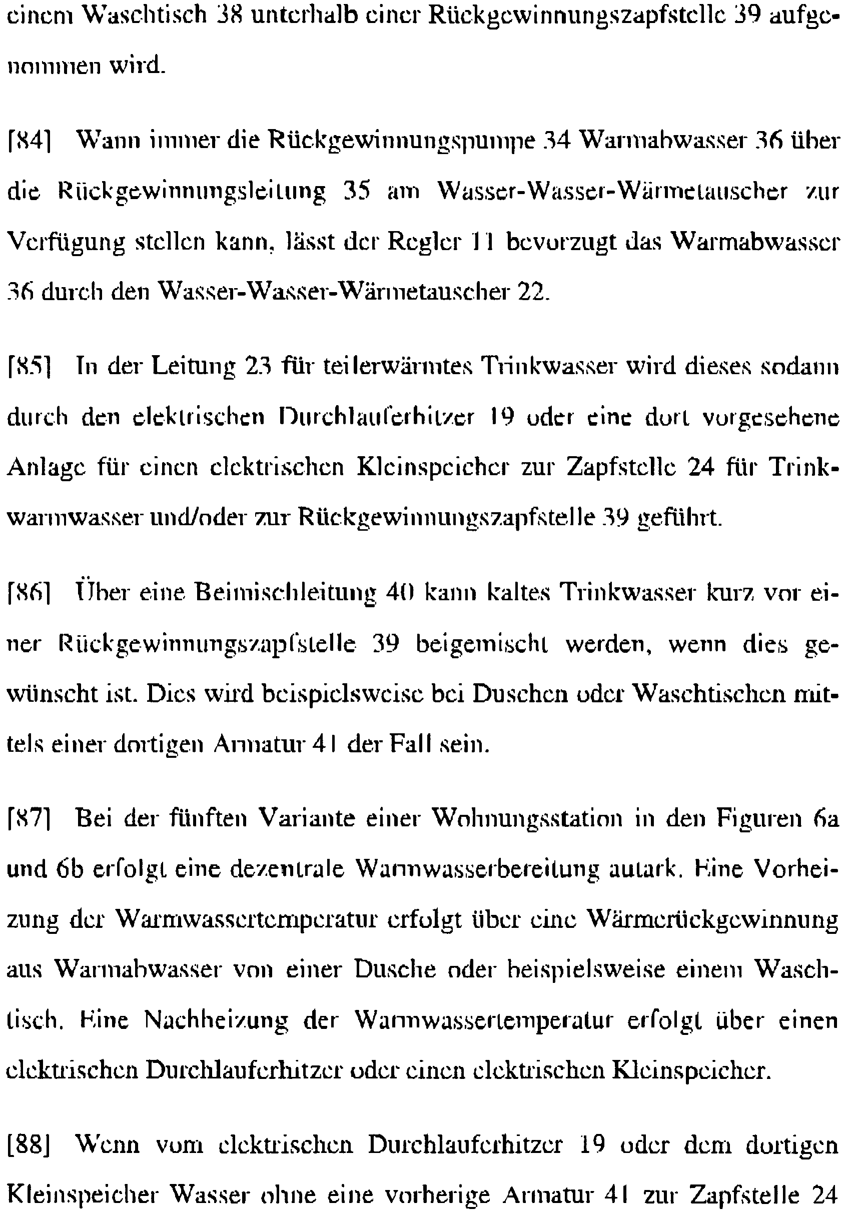

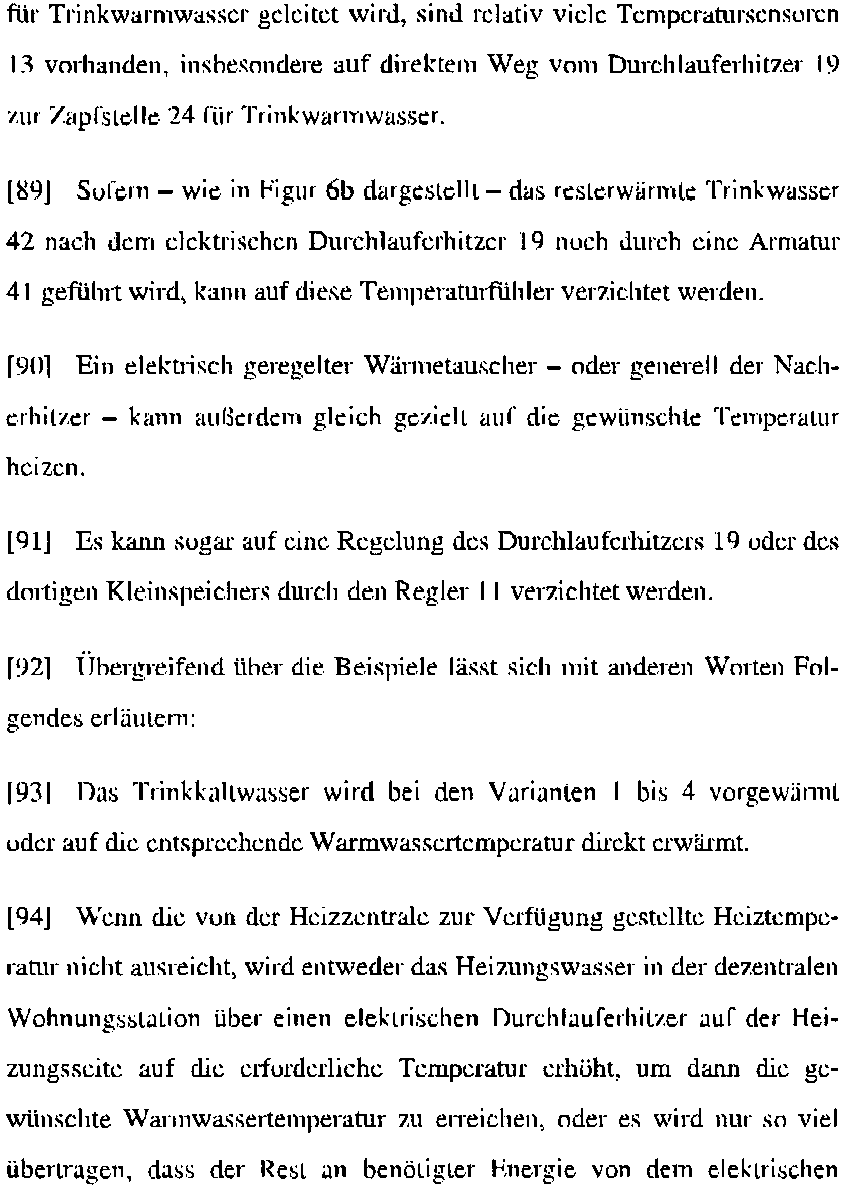

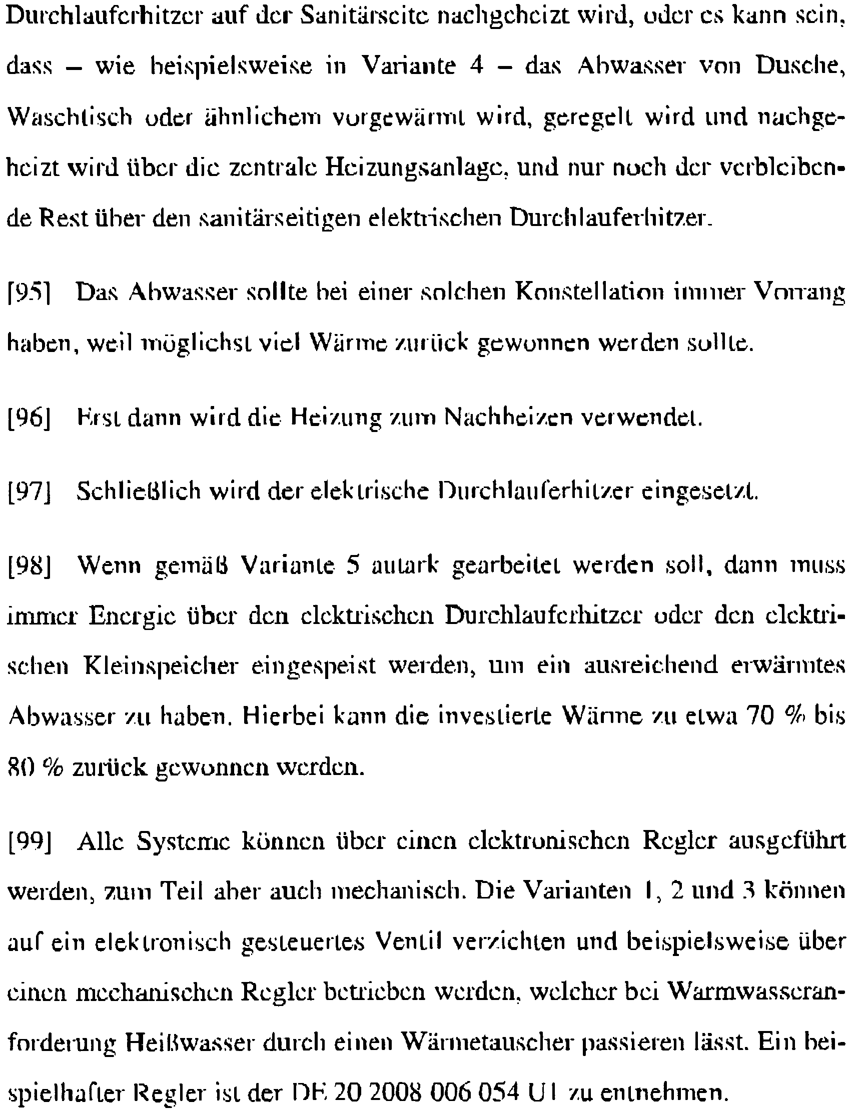

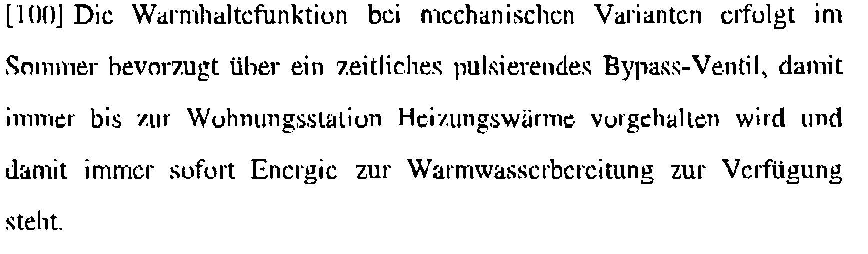

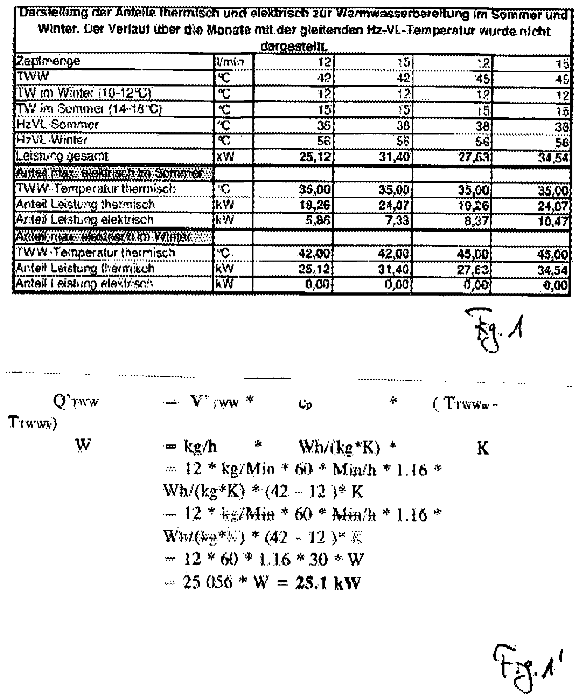

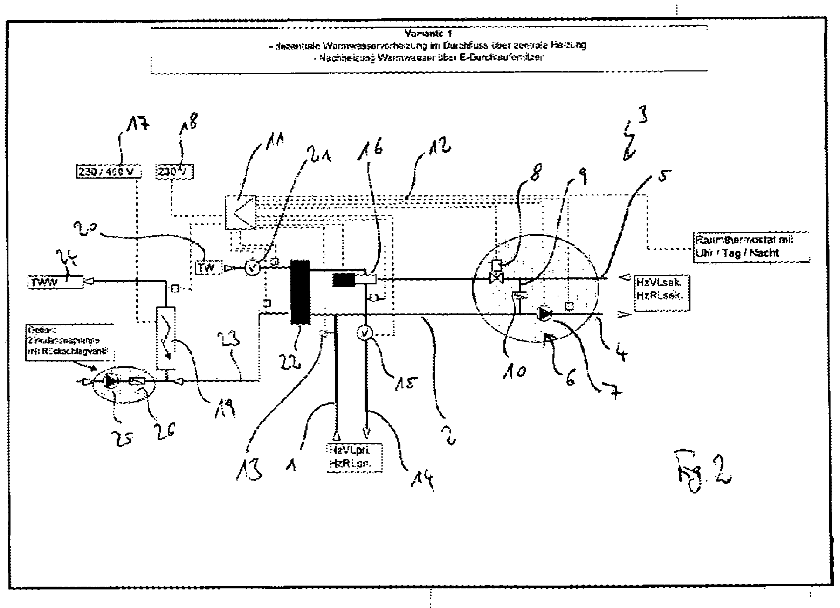

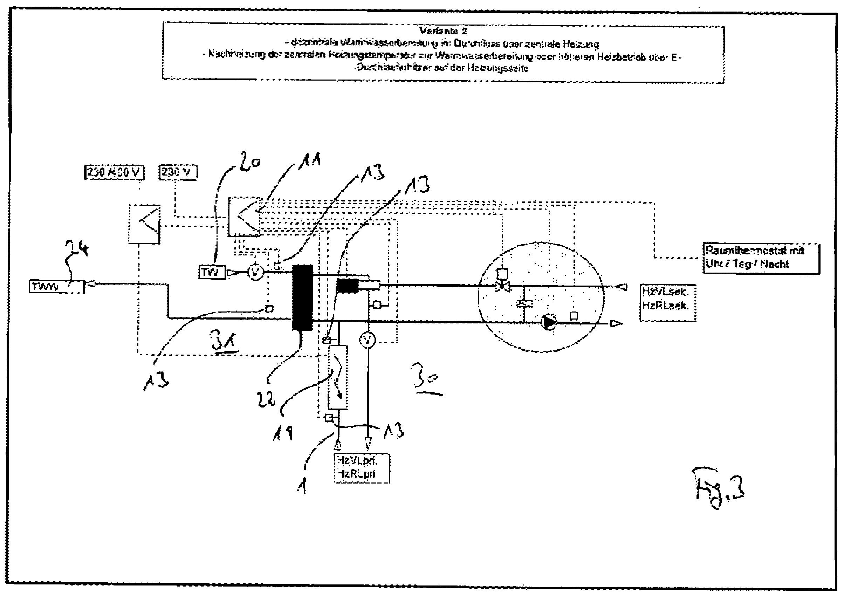

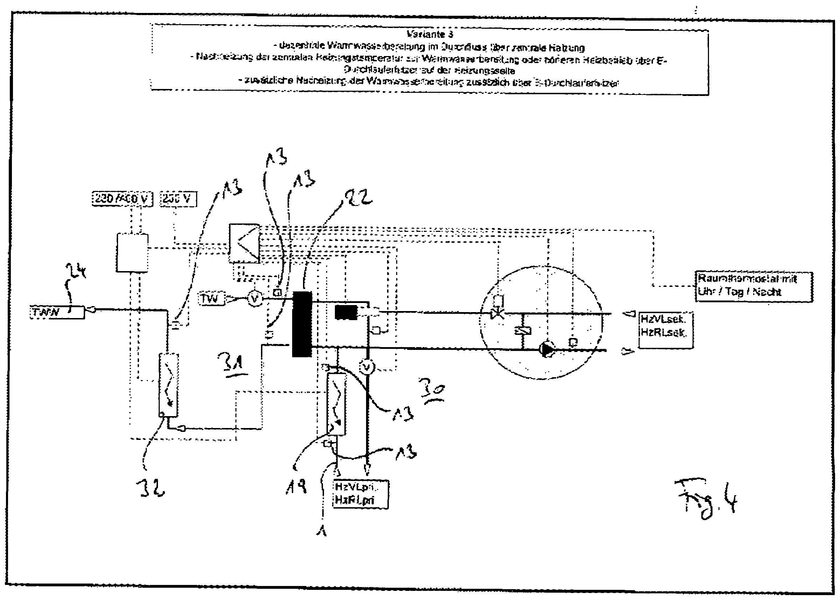

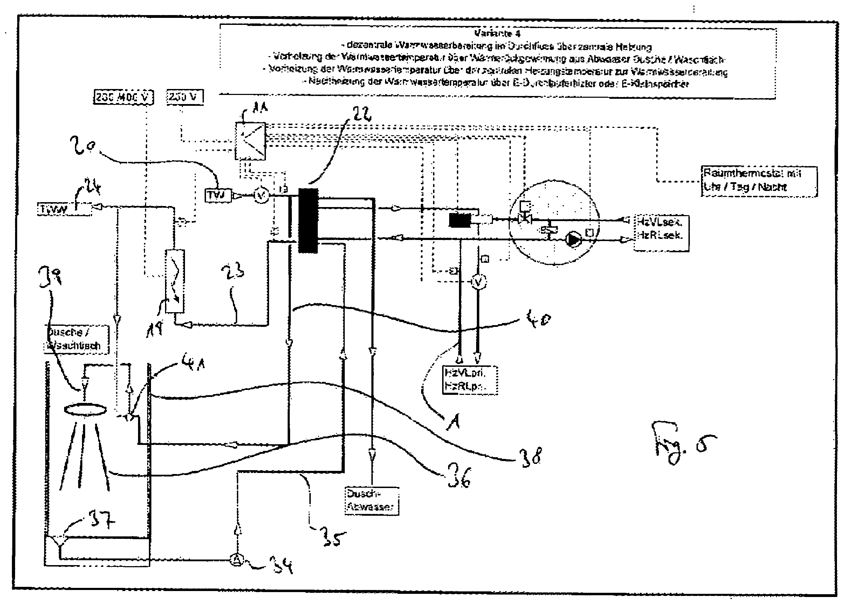

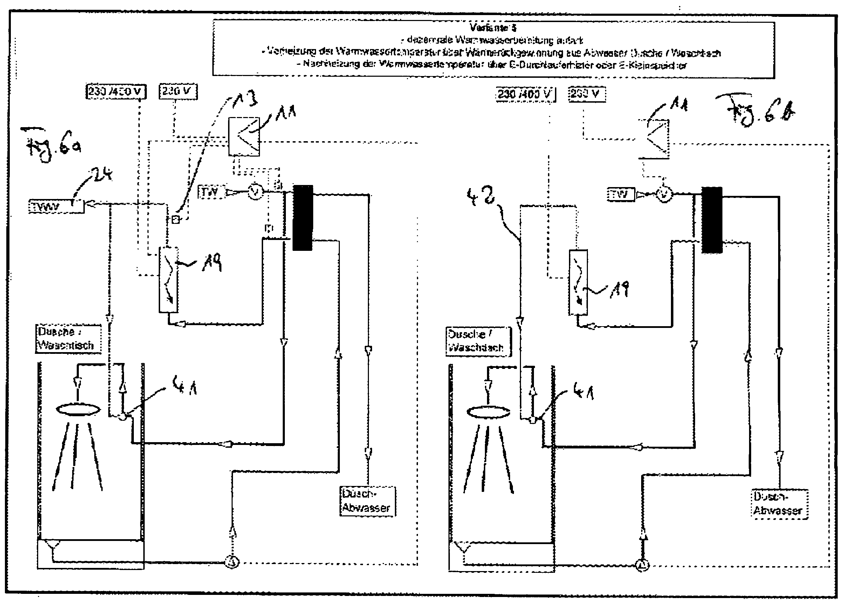

## Patentansprüche

1. Verfahren
